# EUROPEAN PATENT APPLICATION

(11) **EP 2 572 922 A1**
(43) Date of publication of application: **27.03.2013**
(21) Application number: 11290434.7
(22) Date of filing: 26.09.2011
(51) Int. Cl.: B60L 11/18, B61D 3/18

(54) **Method of charging an energy storage unit**

(71) Applicant: Alcatel Lucent, 75007 Paris (FR)
(72) Inventor: Weigmann, Walter, 90765 Fürth (DE); Templ, Wolfgang, 74372 Sersheim (DE)
(74) Representative: Zinsinger, Norbert

(57) **Abstract**

The invention concerns a method of charging an energy storage unit of an electric vehicle (1) while the electric vehicle (1) is situated on a part of a railway train (2), as well as an electric power supply (3) installable on board a railway train (2). On a part of a railway train (2), an electric power supply (3) is provided which is adapted to supply electrical energy suitable to charge an energy storage unit of an electric vehicle (1). A transmission of electrical energy from the electric power supply (3) to the electric vehicle (1) is initiated while the electric vehicle (1) is situated on the part of the railway train (2).

## Description

The present invention relates to a method of charging an energy storage unit of an electric vehicle, and an electric power supply installable on board a railway train.

Electric vehicles have a restricted reach which is determined by their energy storage unit, e.g. a battery. Therefore a user of an electric vehicle has to rely on recurrent opportunities to regularly recharge the energy storage unit of the electric vehicle.

It is the object of the present invention to provide an opportunity to recharge an energy storage unit of an electric vehicle.

The object of the present invention is achieved by a method of charging an energy storage unit of an electric vehicle, comprising the steps of: providing, on a part of a railway train, an electric power supply which is adapted to supply electrical energy suitable to charge the energy storage unit; and initiating a transmission of electrical energy from the electric power supply to the electric vehicle while the electric vehicle is situated on the part of the railway train. The object of the present invention is further achieved by an electric power supply installable on board a railway train, comprising an input unit adapted to receive electrical energy from a railway electrification system which is adapted to supply electrical energy to a driving unit of the railway train and which is associated with a railway track useable by the railway train and/or from an electricity generator on board the railway train, and an output unit adapted to supply electrical energy suitable to charge an energy storage unit of an electric vehicle situated on a part of the railway train.

The present invention is based on the idea that a railway train should be equipped with means to enable an electric vehicle to be recharged. Those means can be fed with electrical energy through the same electric power lines as the railway train itself or through an onboard electric system of a railway train powered e.g. by a Diesel engine, but must ensure the provisioning of electrical energy with suitable voltage and frequency to the electric vehicle. Apart from vehicle/user authentication, authorisation and billing, those means can also support charge monitoring and charge balancing.

The present invention provides an additional and comfortable opportunity to recharge an energy storage unit of an electric vehicle while the vehicle is situated on a part of a railway train. Given that electric vehicles have a restricted reach, a transportation of an electric vehicle on a railway train suggests itself when travelling longer distances. The time period while the electric vehicle is situated on a vehicle loading area of the railway train, e.g. a wagon, provides a favourable opportunity to recharge the energy storage unit of the electric vehicle. A lot of railway trains are typically permanently electrically fed by an overhead power line. But also railway trains driven by diesel engines usually feature onboard electricity generators and suitable means for electrical power supply. The recharging process of the electrical vehicle can take place during the entire time period the electric vehicle is situated on a part of the railway train, which may be several hours to days.

The term "part of a railway train" is meant to denote one or more of any item of rolling stock of a railway train which can be used to transport road vehicles such as automobiles, cars, motorcycles, and lorries. Particularly, the term "part of a railway train" comprises a railway wagon adapted to carry a road vehicle. In particular the term "railway train" is meant to comprise a) a train consisting of two or more items of rolling stock coupled together, at least one of which is a driving unit such as a locomotive, whereby at least one item of rolling stock is adapted to carry one or more road vehiclesi.e., b) one or more driving units, such as a locomotive, comprising a loading area adapted to carry a road vehicle, possibly further comprising one or more coaches, and c) one or more items of not-self-propelled rolling stock adapted to carry road vehicles, i.e. items of rolling stock without a driving unit. The driving unit, e.g. the locomotive, may be powered by at least one of diesel, steam and electrical energy. The railway train may be a motorail, also known as auto train, car shuttle train, or car-carrying train, or a train carrying passengers and/or freight in addition to the electric vehicle.

Electric energy is used to recharge an energy storage unit of an electric vehicle either directly, e.g. by charging a battery or a capacitor, or indirectly, e.g. by driving a flywheel.

Further advantages are achieved by embodiments of inventions indicated by the dependent claims.

According to an embodiment of the invention the electric power supply on the part of a railway train is fed with electrical energy from a railway electrification system which is adapted to supply electrical energy to a driving unit of the railway train and which is associated with a railway track used by the railway train. In addition or alternatively, the electric power supply on the part of a railway train is fed with electrical energy from an electricity generator on board the railway train. A railway electrification system may be overhead lines or a third-rail system of electrification, An electricity generator on board the railway train, whereby the electricity generator is driven e.g. by a diesel motor of the railway train's driving unit, may be available if the railway train is powered by a non-electric powering unit, e.g. a diesel motor,

According to an embodiment of the invention the transfer of electric energy from a railway electrification system or an electricity generator on board the railway train to the electric vehicle and a subsequent billing of the user associated with the electric vehicle based on the received electric energy also works if the user associated with the electric vehicle has no subscription at the provider of the electric energy via the railway electrification system or an electricity generator. in this regard, reference is made to the European patent application EP 2 099 002 A1 which describes a method of transferring energy between a first unit and a second unit. This method makes it possible to recharge an electric vehicle in an arbitrary country, at a preferred rate or with a specific electricity mix, e.g. electricity from renewable sources like water, wind or sun, or during a preferred time period, e.g. during night time with a cheaper electricity rate. In particular, reference is also made to the description in the above mentioned patent application where it is specified how to establish the billing based on different tariffs. In the description of the present invention, the term "user associated with the electric vehicle" is meant to comprise an owner of the vehicle.

According to an embodiment of the invention the electric power supply further comprises a cable and/or a wireless energy transmission unit adapted to transmit electrical energy from the electric power supply to the energy storage unit of the electric vehicle while the electric vehicle is situated on the part of the railway train. Preferably, the wireless energy transmission unit is an inductive charging system. It is possible that the electric power supply comprises at least one socket installed on at least wagon. Preferably, each wagon of the railway train comprises at least one socket. Further preferably, each vehicle storing position on a wagon of the railway train comprises a socket so that an electric vehicle situated on a storing position can readily be connected via a cable to the electric power supply. A user associated with the electric vehicle or service personnel may establish a cable connection between the socket and the energy storage unit of the electric vehicle.

It is possible that a wagon of the railway train has a separate electric power supply which provides electric energy to the one or more electric vehicles situated on the wagon. In this case the wagon can provide electric power supply independently of other wagons or of a driving unit. This provides advantages if vehicle-carrying wagons of a first train to a first destination are temporarily decoupled from the first train, e.g. for a continuation of their journey to a second destination with a second train which is yet to arrive. However, it is also possible that a railway train with two or more items of rolling stock comprises a central electric power supply onboard one of the items from which all electric vehicles on the railway train are fed with electrical energy.

The electric power supply may consist of one or more electric power supply units. It is possible that the electric power supply has a direct connection, e.g. a pantograph, to the railway electrification system. Alternatively it is possible that only a limited number of electric power supply units have a direct connection to the railway electrification system and that electric power supply units without direct connection to the railway electrification system are fed with electrical energy from the railway electrification system via another electric power supply unit.

According to an embodiment of the invention the electric power supply comprises a switch which allows to open and interrupt the transfer of electric energy to the electric vehicle. Preferably the switch is controlled by a control unit of the electric power supply. The switch may be a conventional, electrically switchable current interrupting switch or any other means, e.g. a control function, adapted to start and interrupt a transmission of electrical energy to the electric vehicle. it is also possible that the switch is a logical control function adapted to establish and interrupt an electric connection between a source of electrical energy, e.g. a railway electrification system such as overhead lines or an electricity generator, and the electric vehicle.

According to an embodiment of the invention the electric power supply further comprises an electric transformer and/or converter unit adapted to provide a conversion of the electricity, e.g. current, voltage, or frequency, received at the input unit into an electricity form, e.g. current, voltage, or frequency, which is suited, dependent on requirements of the electric vehicle, to be supplied via the output unit to the electric vehicle.

It is possible that the method further comprises the step of providing for a conversion of the electricity supplied by the railway electrification system and/or by the electricity generator into a form which is suited, dependent on requirements of the electric vehicle, to be supplied by the electric power supply to the electric vehicle. The conversion of electricity ensures the transformation of the electricity coming from the railway electrification system or the electricity generator into a correct range for the charging procedure with regard to voltage, frequency, etc.

According to an embodiment of the invention the method further comprises the step of measuring an amount of electrical energy supplied by the railway electrification system and/or by the electricity generator and/or measuring an amount of electrical energy transmitted to the electric vehicle. It is possible that the electric power supply further comprises a metering unit adapted to measure an amount of electrical energy received via the input unit and/or transmitted via the output unit to the electric vehicle, It is possible that the electric power supply is provided by a supplier of electric energy. It is also possible that the electric power supply is provided by an operator of the railway train or an operator of the railway tracks used by the railway train.

According to an embodiment of the invention the electric power supply further comprises a control unit adapted to transmit measurement data concerning an amount of electrical energy received via the input unit and/or transmitted via the output unit to the electric vehicle to an electronic device associated with a user associated with the electric vehicle and/or the electric vehicle and/or a provider of the electric power supply.

According to another embodiment of the invention the method further comprises the step of providing for a transmission of information about the measurement, preferably comprising measurement data and/or measured data, to an electronic device associated with a user associated with the electric vehicle and/or the electric vehicle and/or a provider of the electric power supply. The information about the measurement may be displayed in a display of the electronic device so that a user of the electronic device can control the transmission of electrical energy based on the received information. According to an embodiment of the invention that the method further comprises the steps of: determining a tariff associated with the electrical energy; and sending, preferably by the data base a tariff message specifying the determined tariff to an electronic device associated with a user associated with the electric vehicle and/or the electric vehicle. It is possible that the user receives the tariff message on his electronic device or on a receiver display of the electric vehicle and decides whether he wants to purchase electrical energy at the specified tariff. It is possible that the user gives his approval of the specified tariff by sending an approval message to the data base. It is also possible that the user is deemed to give his approval of the specified tariff if he does not send a stop message within a predefined time period. Preferably, the transmission of electrical energy from the electric power supply to the electric vehicle is initiated only after the user's approval.

According to an embodiment of the invention the electric power supply further comprises a billing module adapted to receive measurement data concerning an amount of electrical energy received via the input unit and/or transmitted via the output unit to the electric vehicle and charge, based on the measurement data, an account of a user associated with the electric vehicle and/or a provider of the electric power supply for the delivery of electrical energy by a supplier of electric energy. Preferably, an account of the user associated with the electric vehicle and/or a provider of electric power supply is charged for the delivery of electrical energy based on at least one of the said measurements. The said provider of the electric power supply may be an operator operating the railway train, e.g. a railway company or an independent service provider who has a contract with an operator of the railway train to provide the electric power supply onboard the railway train.

Preferably, the billing module is adapted to communicate with at least one communication module of a supplier of electric energy and to receive up-to-date information about an availability of certain tariffs of electric energy.

According to an embodiment of the invention the electric power supply further comprises a data base adapted to control the transmission of electrical energy from the electric power supply to the electric vehicle based on a preceding authentication procedure, to receive information about the measurement, preferably comprising measurement data and/or measured data concerning an amount of electrical energy received via the input unit and/or transmitted via the output unit of the electric vehicle, and to hold and change records about the electric vehicle and/or a user associated with the electric vehicle and/or a provider of the electric power supply.

It is possible that the method further comprises the step of controlling the transmission of electrical energy from the electric power supply to the electric vehicle based on a preceding authentication and/or authorisation procedure. First the user associated with the electric vehicle and/or the electric vehicle itself is identified, e.g. by means of a log-in message comprising an ID which is sent from an electronic device of the user associated with the electric vehicle and/or the electric vehicle to the data base. Then it is determined whether the user associated with the electric vehicle and/or the electric vehicle is known to the data base, and entitled to receive electrical energy, i.e. an authentication and/or authorisation procedure is performed, It may be examined whether the electric vehicle is registered in the data base as trustworthy, i.e. the data base may check whether previous bills associated with supply of electrical energy to the electric vehicle have been correctly paid or are still outstanding. It is only if the authentication and/or authorisation procedure is positively completed that electrical energy is supplied to the electric vehicle.

According to an embodiment of the invention the data base is adapted to receive data about a purchase order from a user associated with the electric vehicle, and to control the subsequent transfer of electrical energy from the electric power supply to the electric vehicle based on the received order.

Preferably, the data base and/or the billing module of the electric power supply are not installed on a wagon of the railway train but in a remote location, e.g. a central office. Preferably, a data communication between the electric power supply and the electric power supply units, respectively, and the centralised data base and/or the billing module of the electric power supply is via a wireless communication network.

Preferably, the electric vehicle and/or its user has an identification unit that transmits identifying data identifying the electric vehicle and/or the user to the data base, so that charging only begins once the vehicle and/or its user is successfully identified and authenticated. The identification unit may be installed in the electric vehicle or on a mobile device of the user, e.g. his mobile phone. It is possible that the identification unit is represented by a software application running on a device of the electric vehicle, e.g. an electronics control unit, or on a mobile device of the user, e.g. a mobile phone.

It is possible that an authentication request from the electric vehicle and/or a user associated with the electric vehicle is verified. If the authentication request is approved, the electric vehicle is authorised to receive electrical energy from the first electric power supply.

According an embodiment of the invention the electric power supply is installed on at least one wagon of the railway train adapted to carry the electric vehicle.

These as well as further features and advantages of the invention will be better appreciated by reading the following detailed description of exemplary embodiments taken in conjunction with accompanying drawings of which:
- Fig. 1: shows a first embodiment of the electric power supply according to the invention;
- Fig. 2: shows another embodiment of the electric power supply according to the invention;
- Figs. 3 - 6: show further embodiments of the electric power supply according to the invention; and
- Fig. 7: shows a block diagram with the interaction between different components of an electric power supply according to another embodiment of the invention.

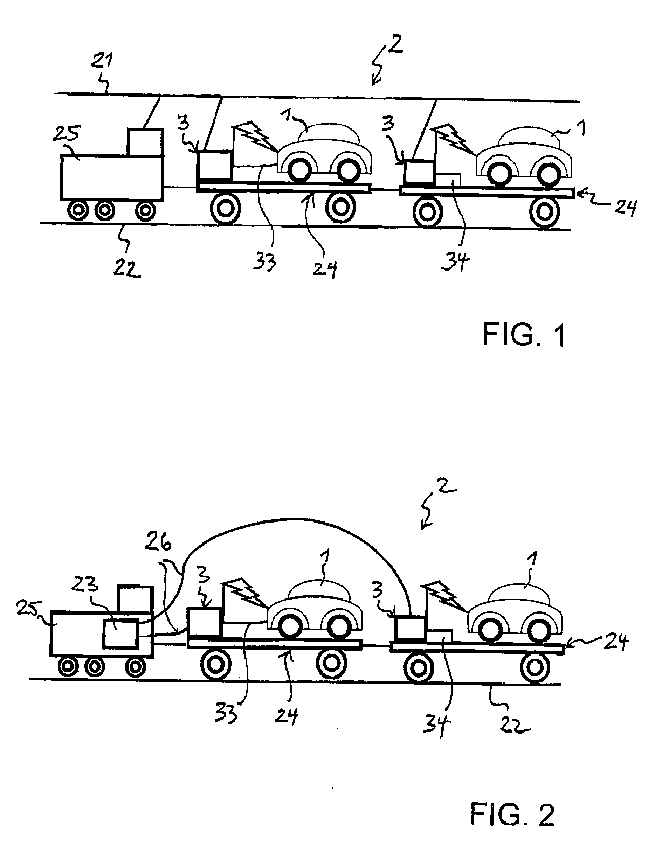

Figure 1 shows a railway train 2 comprising a driving unit 25, e.g. a locomotive, and two wagons 24 drawn by the driving unit 25. The railway train 2 is set on railway tracks 22 along which electric overhead lines 21 are spanned. Electric vehicles 1 are situated on the wagons 24. The wagons 24 comprise electric power supply units 3 which are, like the driving unit 25, electrically connected to the overhead lines 21. It is possible that each of the electric power supply units 3 has an individual, separate electric connection to the electric overhead lines 21, as is shown in Fig. 1, Alternatively it is possible that the railway train 2 has a single electric connection to the electric overhead lines 21 and that electrical energy is distributed via an electric distribution network onboard the railway train 2 from this single electric connection to the plurality of electric power supply units 3 onboard the railway train 2, Electrical energy is fed from the overhead lines 21 to the electric power supply 3 where the electrical energy is processed to be supplied to energy storage units of electric vehicles 1. This transmission of electrical energy from the electric power supply 3, preferably comprising a plurality of electric power supply units 3, to the electric vehicles 1 may be achieved by means of a wire cable 33, as shown on the left wagon 24, or by means of an inductive charging unit 34, as shown on the right wagon 24.

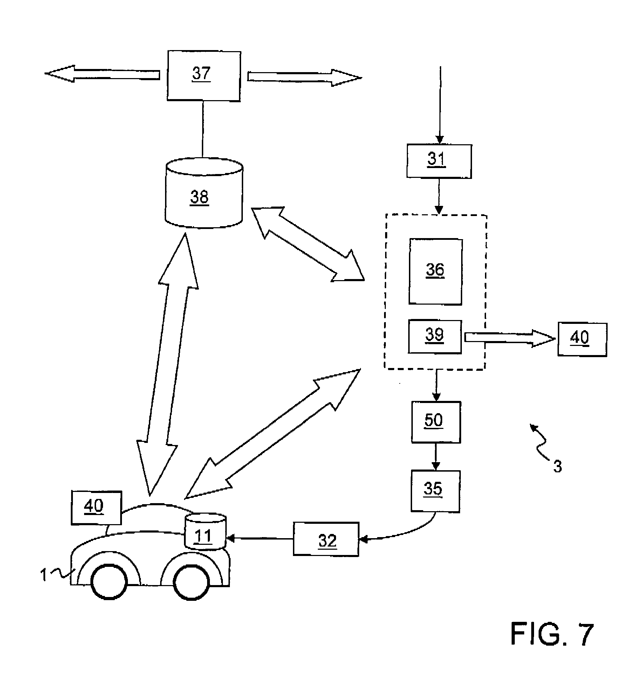

If the electrical energy provided by the overhead line 21 is not suitable to be directly supplied to electric vehicles 1, the electric power supply 3 may comprise an electric transformer and/or converter unit 35 to provide a conversion of the electricity received at an input unit 31 of the electric power supply into a form which is suited, dependent on requirements of the electric vehicle, to be supplied by an output unit 32 to the electric vehicle 1 (cf. Fig. 7), The electric power supply 3 further comprises means to exchange data with the electric vehicle 1 or a user associated with the electric vehicle 1 as indicated by the flash-shaped symbols in Figure 1.

Figure 2 shows another embodiment of an electric power supply onboard arailway train 2. Comparing Figure 1 and Figure 2 it is apparent that the railway train 2 of Figure 2 does not have a driving unit 25 which is powered by electrical energy, but the driving unit 25 is powered by another energy source, e.g. diesel. The driving unit 25 comprises an electricity generator 23 which supplies, e.g. by means of cables 26, electrical energy to the electric power supplies 3. If the electrical energy supplied by the electricity generator 23 is not suited to be directly fed to the energy storage units 11 of the electric vehicles 1, the electric power supplies 3 may further comprise an electric transformer and/or converter unit 35 (cf. Fig, 7) to provide a suitable conversion of the electricity to be supplied to the electric vehicles 1.

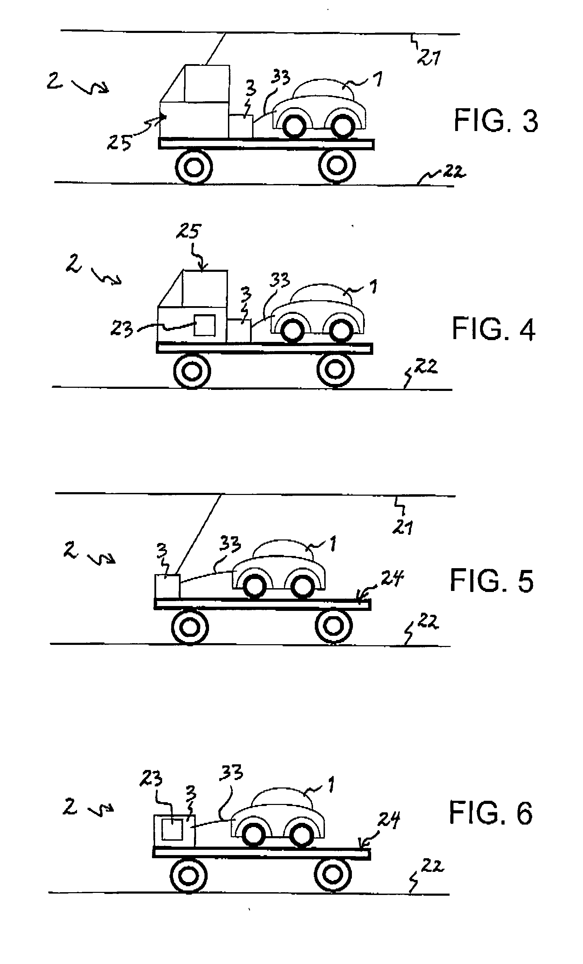

Fig. 3 shows another embodiment of an electric power supply onboard a railway train 2 whereby the railway train 2 consists of a driving unit 25 with a loading area carrying an electric car 1. The driving unit 25 is electrically powered by means of overhead lines 21 running along the railway tracks 22. The driving unit 25 forwards a part of the electrical energy taken from the overhead lines 21 to the electric power supply unit 3 installed on the driving unit 25. From the electric power supply unit 3 electrical energy is supplied via a cable 33 to the electric car 1.

Fig. 4 shows another embodiment of an electric power supply onboard a railway train 2 similar to the railway train shown in Fig. 3, except that the driving unit 25 of Fig. 4 is not electrically powered but powered by a Diesel engine. The driving unit 25 further comprises an electricity generator 23 which generates electrical energy for feeding the electric power supply 3 installed on the driving unit 25. From the electric power supply unit 3 electrical energy is supplied via a cable 33 to the electric car 1.

Fig. 5 shows an embodiment of an electric power supply onboard a part of a railway train 2 whereby the part of the railway train 2 consists of a railroad wagon 24 with a loading area carrying an electric car 1. The wagon 24 comprises an electric power supply unit 3 which is electrically fed from overhead lines 21 running along the railway tracks 22. From the electric power supply unit 3 electrical energy is supplied via a cable 33 to the electric car 1.

Fig. 6 shows another embodiment of an electric power supply onboard a part of a railway train 2 similar to the part of the railway train shown in Fig. 5, except that the electric power supply unit 3 of Fig. 6 is not electrically fed from overhead lines 21 but from an electricity generator 23 which generates electrical energy. From the electric power supply unit 3 electrical energy is supplied via a cable 33 to the electric car 1.

Embodiments of an electric power supply onboard a part of a railway train 2 as shown in Figs. 5 and 6 are especially advantageous if one or more vehicle-carrying items of rolling stock, e.g. wagons, of a first train to a first destination are temporarily decoupled from the first train, e.g. for a continuation of their journey to a second destination with a second train which is yet to arrive. Since the supply of electricity on the one or more vehicle-carrying items of rolling stock is independent of a driving unit of a railway train, e,g, a locomotive, the electric vehicle can even be supplied with electric energy during times when the one or more vehicle-carrying items of rolling stock are not coupled to a driving unit. Therefore an energy storage unit of an electric vehicle can also be charged during interruptions of a journey, e.g. while vehicle-carrying items of rolling stock are parked on a holding track.

Figure 7 shows an electric vehicle 1 situated on a part of a railway train. The electric vehicle 1 has an energy storage unit 11. Further an electronic device 40, e.g. a mobile phone or a dashboard device, is associated with the electric vehicle 1 and comprises a display to display received data. The electric power supply 3 comprises an input unit 31 which receives electrical energy, e.g. from a railway electrification system, such as overhead lines or an electricity generator. The electric power supply 3 further comprises a metering unit 36 which measures the amount of electrical energy received by the input unit 31. It is possible that a control unit 39 of the electric power supply 3 comprises a transmitting function for transmitting measurement data provided by the metering unit 36 to electronic devices 40 associated with the user of the electric vehicle 1 and/or a provider of electricity. It is also possible that the measurement data is transmitted by the control unit 39 directly to the dashboard of the electric vehicle 1. After the metering unit 36 the electrical energy is fed into an electric transformer and/or converter unit 35 which provides a conversion of the electricity received at the input unit 31 into an electricity form which is suited, dependent on the requirements of the electric vehicle 1, to be supplied via the output unit 32 to electric vehicle 1. After the electric transformer and/or converter unit 35 the electrical energy is supplied via the output unit 32 to the energy storage unit 11 of the electric vehicle 1.

The electric power supply 3 may further comprise a database 38 and a billing module 37. Preferably, the data base 38 and the billing module 37 are composed of one or several inter-linked computers, i.e., a hardware platform, a software platform basing on the hardware platform and several application programs executed by the system platform formed by the software and hardware platform. The functionality of the data base 38 and of the billing module is provided by the execution of these application programs. The application programs or a selected part of these application programs constitute a computer software product providing a recharge and billing service as described in the following, when executed on the system platform. Further, such computer software product is constituted by a storage medium storing these application programs or said selected part of application programs.

A typical procedure to recharge an energy storage unit 11 of an electric vehicle 1 may be performed as follows: a user of the electric vehicle 1 uses an electric device 40, e.g. his mobile phone or a device installed in the electric vehicle 1, to send a request for delivery of electrical energy to the database 38. The database 38 checks whether the user of the electric vehicle 1 is already known to the database 38. If not, the user of the electric vehicle 1 has to undergo a registration procedure in order to establish for the new user a user account in the database 38, or a stop procedure in which the user's request for delivery of electrical energy is denied by the database 38 and the communication between the user and the database 38 is terminated.

If the user of the electric vehicle 1 is already known to the database 38, i.e. if the user of the electric vehicle 1 can be identified by the database 38, it is determined whether the user wants to pay immediately, e.g. by debiting a credit card of the user, or if the user prefers to debit an existing account of the user administered by a supplier of electric energy with regard to an electricity delivery contract between the user and the supplier of electric energy. This debiting of the user account is straightforward if the supplier of electric energy to the part of the railway train is identical to the supplier of electric energy managing the aforementioned electricity delivery contract. However it is also possible that an existing user account of the user associated with a first supplier of electric energy is debited for the electricity delivery to the user's vehicle although the part of the railway train, and consequently also the electric power supply onboard the part of the railway train, is supplied with electrical energy by a second supplier of electric energy, preferably by means of an account clearing among the first supplier of electric energy and the second supplier of electric energy.

Preferably, the data base 38 also determined the currently valid tariff and delivers this information to the user's electric device 40, it is possible that the user of the electric vehicle 1 indicates how much electrical energy he wants to have supplied to the electric vehicle 1, e.g. in the form of money or defined as an amount of energy, e.g. in an energy unit such as kWh or as a charge state of the energy storage unit 11, e.g. full, three quarter full or half full. After the payment and the amount of electrical energy to be supplied is determined, the database 38 gives an approval message to the control unit 39 in order to initiate a transmission of electrical energy to the electric vehicle 1.

The control unit 39 controls an electric switch 50 to establish an electric connection between a source of electrical energy, e.g. a railway electrification system such as overhead lines or an electricity generator, and the electric vehicle 1. The flow of electrical energy is started into the input unit 31 und via the metering unit 36 to the electric vehicle 1. It is possible that the user of the electric vehicle 1 has indicated how much electrical energy he wants to have supplied to the electric vehicle 1, e.g, in the form of money or defined as an amount of energy, e.g. in an energy unit such as kWh or as a charge state of the energy storage unit 11, e.g. full, three quarter full or half full, or that the electric power supply 3 automatically receives a stop signal from the electric vehicle 1 if the energy storage unit 11 is fully charged.

After the defined amount of electrical energy has been fed to the electric vehicle 1, the metering unit 36 sends a termination signal to the database 38 which indicates the amount of electrical energy delivered to the electric vehicle 1. It is advantageous if during the transmission of electrical energy to the electric vehicle 1 a message comprising the current amount of electrical energy already supplied to the electric vehicle 1 and/or the corresponding cost is transmitted in real-time to electronic devices 40 associated with the electric vehicle 1 and/or a provider of electricity and/or an operator of the part of the railway train 2.

The supplier of electric energy to the railway company operating the part of the railway train charges an electricity billing account of the railway company for delivery of the amount of electrical energy eventually supplied to the electric vehicle. Since the final consumer is the user the electric vehicle and not the part of the railway train itself, the data base 38 has to conduct a balancing of accounts. After the data base 38 has received data about the amount of electrical energy fed to the electric vehicle 1, the data base 38 accesses the records associated with the electric vehicle 1 and the records associated with the railway company operating the part of a railway train 2. Based on these records the data base 38 does the balancing: the costs associated with the amount of electrical energy delivered to the user's electric vehicle 1 are deducted from the electricity billing account of the railway company and charged on an electricity billing account of the user, since not the railway company is the final consumer of the electrical energy but the user. The billing module 37 is adapted to establish a corresponding bill to the user of the electric vehicle 1.

The exchange of data and information between the different entities described in this description may be conducted via wire-line or wireless communication connections, preferably using a secure standard communication protocol.

It is possible that the user, for charging the energy storage unit of his electric vehicle, can make use of a tariff associated with an already existing "home" electricity delivery contract between the user and a supplier of electric energy.

It is also possible that the present invention is adapted to be performed while the railway train 2 changes from a first railway electrification system into a second railway electrification system, e,g. when crossing a state border. It is possible that the user of an electric vehicle 1 can define in what area, in what time period or for what electricity tariff he wants his electric vehicle 1 to be recharged. Furthermore, the user of the electric vehicle 1 may define further user preferences, e.g. to be provided with electrical energy from the specific electrical energy resource.

## Claims

1. A method of charging an energy storage unit (11) of an electric vehicle (1), comprising the steps of:
providing, on a part of a railway train (2), an electric power supply (3) which is adapted to supply electric energy suitable to charge the energy storage unit (11); and
initiating a transmission of electric energy from the electric power supply (3) to the electric vehicle (1) while the electric vehicle (1) is situated on the part of the railway train (2).

2. A method according to claim 1,
**characterised in**
**that** the electric power supply (3) on the part of the railway train (2) is fed with electric energy by a railway electrification system (21) which is adapted to supply electrical energy to a driving unit of the railway train and which is associated with a railway track (22) used by the railway train (2) and/or that the electric power supply (3) on the part of the railway train (2) is fed with electrical energy by an electricity generator (23) on board the railway train (2).

3. A method according to claim 2,
**characterised in**
**that** the method further comprises the step of:
providing a conversion of the electricity supplied by the railway electrification system (21) and/or by the electricity generator (23) into a form which is suited, dependent on requirements of the electric vehicle (1), to be supplied by the electric power supply (3) to the electric vehicle (1).

4. A method according to any of claims 1 to 3,
**characterised in**
**that** the method further comprises the step of:
measuring an amount of electrical energy supplied by the railway electrification system (21) and/or by the electricity generator (23) and/or measuring an amount of electrical energy transmitted to the electric vehicle (1).

5. A method according to claim 4,
**characterised in**
**that** the method further comprises the step of:
providing a transmission of measurement data to an electronic device (40) associated with a user associated with the electric vehicle (1) and/or the electric vehicle (1) and/or a provider of the electric power supply (3).

6. A method according to any of claims 1 to 5,
**characterised in**
**that** the method further comprises the steps of:
determining a tariff associated with the electrical energy to be transmitted to the electric vehicle (1); and
sending, to an electronic device (40) associated with a user associated with the electric vehicle (1) and/or the electric vehicle (1), a tariff message specifying the determined tariff.

7. An electric power supply (3) installable on board a railway train (2), comprising an input unit (31) adapted to receive electrical energy from a railway electrification system (21) which is adapted to supply electrical energy to a driving unit of the railway train and which is associated with a railway track (22) useable by the railway train (2) and/or from an electricity generator (23) on board the railway train (2), and an output unit (32) adapted to supply electrical energy suitable to charge an energy storage unit (11) of an electric vehicle situated on a part of the railway train (2).

8. An electric power supply (3) according to claim 7,
**characterised in**
**that** the electric power supply (3) further comprises a cable (33) and/or an inductive transmission unit (34) adapted to transmit electrical energy from the electric power supply (3) to the energy storage unit (11) of the electric vehicle (1) while the electric vehicle (9) is situated on the part of the railway train (2).

9. An electric power supply (3) according to any of claims 7 and 8,
**characterised in**
**that** the electric power supply (3) further comprises an electric transformer and/or converter unit (35) adapted to provide a conversion of the electricity received at the input unit (31) into a form which is suited, dependent on requirements of the electric vehicle (1), to be supplied via the output unit (32) to the electric vehicle (1).

10. An electric power supply (3) according to any of claims 7 to 9,
**characterised in**
**that** the electric power supply (3) comprises a switch (50) which allows to open and interrupt the transfer of electric energy to the electric vehicle (1).

11. An electric power supply (3) according to any of claims 7 to 10,
**characterised in**
**that** the electric power supply (3) further comprises a metering unit (36) adapted to measure an amount of electrical energy received via the input unit (31) and/or transmitted via the output unit (32) to the electric vehicle (1).

12. An electric power supply (3) according to any of claims 7 to 11,
**characterised in**
**that** the electric power supply (3) further comprises a billing module (37) adapted to receive measurement data concerning an amount of electrical energy received via the input unit (31) and/or transmitted via the output unit (32) to the electric vehicle (1) and charge, based on the measurement data, an account of a user associated with the electric vehicle (1) and/or a provider of the electric power supply (3) for the delivery of electrical energy.

13. An electric power supply (3) according to any of claims 7 to 12,
**characterised in**
**that** the electric power supply (3) further comprises a data base (38) adapted to control the transmission of electrical energy from the electric power supply (3) to the electric vehicle (1) based on a preceding authentication procedure, to receive measurement data concerning an amount of electrical energy received via the input unit (31) and/or transmitted via the output unit (32) to the electric vehicle (1), and to hold and change records about the electric vehicle (1) and/or a user associated with the electric vehicle (1) and/or a provider of the electric power supply (3).

14. An electric power supply (3) according to any of claims 7 to 13,
**characterised in**
**that** the electric power supply (3) further comprises a control unit (39) adapted to transmit measurement data concerning an amount of electrical energy received via the input unit and/or transmitted via the output unit to the electric vehicle (1) to an electronic device (40) associated with a user associated with the electric vehicle (1) and/or the electric vehicle (1) and/or a provider of the electric power supply (3),

15. An electric power supply (3) according to any of claims 7 to 14,
**characterised in**
**that** the electric power supply (3) is installed on at least one wagon (24) of the railway train (2) adapted to carry the electric vehicle (1).
